# EUROPEAN PATENT APPLICATION

(11) **EP 2 902 672 A1**
(43) Date of publication of application: **05.08.2015**
(21) Application number: 13842141.7
(22) Date of filing: 03.09.2013
(51) Int. Cl.: F16H 61/18, F16D 48/02

(54) **AUTOMATIC TRANSMISSION EQUIPPED WITH FRICTION ELEMENT HAVING LOCKING MECHANISM ATTACHED THERETO, AND CONTROL METHOD THEREFOR**

(30) Priority: 26.09.2012 JP 2012212188
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP); MATSUMOTO, Kouzi, Fuji-shi Shizuoka 417-8585 (JP); IKEDA, Tomomasa, Fuji-shi Shizuoka 417-8585 (JP)
(74) Representative: Hoefer & Partner Patentanwälte mbB
(86) International application number: PCT/JP2013/073644
(87) International publication number: WO 2014/050452

(57) **Abstract**

A transmission controller determines whether a vehicle is going to stop based on a driving condition of the vehicle. When it is determined that the vehicle is going to stop, a lock mechanism is placed in an unlocked state through a supply of an OFF pressure to an OFF pressure piston chamber even if a D mode is selected by a select switch.

## Description

### TECHNICAL FIELD

The present invention relates to control of an automatic transmission equipped with a friction element having a lock mechanism attached thereto.

### BACKGROUND ART

A friction element operated with a hydraulic pressure is used as a clutch and a brake of an automatic transmission so as to join two coaxial members to each other (in the case of the clutch, the two coaxial members are both rotational elements, whereas in the case of the brake, one of the two coaxial members is a rotational element and the other is a non-rotational element) (JP 7-12221A).

In such a friction element, for example, the two members each have a plurality of friction plates attached thereto such that the friction plates are slidable in an axial direction, and the friction plates of the two members alternate. When the friction plates of the two members are pressed against one another by a hydraulic piston, the two members are joined to each other via the friction plates.

### SUMMARY OF INVENTION

In order to maintain an engaged state of the aforementioned friction element, it is necessary to keep supplying a hydraulic pressure to the hydraulic piston by driving a hydraulic pump with an engine. This undesirably degrades the fuel economy of a vehicle equipped with an automatic transmission.

In view of this, it is possible to supply the hydraulic pressure until the friction element is engaged and, after the friction element is engaged, restrict a movement of the hydraulic piston using a lock mechanism so that the engaged state of the friction element can be maintained even with a reduction in the hydraulic pressure. This configuration makes it possible to reduce the load of the hydraulic pump that generates the hydraulic pressure, and to improve the fuel economy of the vehicle. It is preferred that activation and deactivation of such a lock mechanism be performed with the hydraulic pressure.

However, in the case of the configuration in which activation and deactivation of the lock mechanism is performed with the hydraulic pressure, there is a possibility that deactivation of the lock mechanism is delayed in a low vehicle speed range regardless of an attempt to release the friction element by deactivating the lock mechanism when a mode selected by a select switch is changed from a D mode (driving mode) to an N mode (non-driving mode). This is because, in the low vehicle speed range, an ejection pressure of the hydraulic pump is lowered, and the rise of the hydraulic pressure used in deactivation of the lock mechanism is delayed.

A delay in deactivation of the lock mechanism leads to a delay in release of the friction element, and hence to continuation of a state where the power of the engine is transmitted via the friction element. If the vehicle stops in this state, a problem could possibly arise in which the power of the engine is transmitted even though the N mode is selected and the vehicle is stopped.

It is an object of the present invention to prevent a situation in which the power of an engine is transmitted while a non-driving mode is selected and a vehicle is stopped due to a delay in deactivation of a lock mechanism in a low vehicle speed range.

According to an aspect of the present invention, provided is an automatic transmission including a friction element, a select switch, a control device, and a vehicle stop determination unit. The friction element is arranged on a power transmission path such that a lock mechanism is placed in a locked state through a supply of an ON pressure to an engagement-side oil chamber and placed in an unlocked state through a supply of an OFF pressure to a release-side oil chamber. Once the lock mechanism has been placed in the locked state, the friction element is maintained in an engaged state, even with a reduction in a hydraulic pressure in the engagement-side oil chamber. Once the lock mechanism has been placed in the unlocked state, the friction element is maintained in a released state, even with a reduction in a hydraulic pressure in the release-side oil chamber. The select switch is capable of selecting a driving mode or a non-driving mode as a mode of the automatic transmission. The control device performs engagement control and release control when the driving mode and the non-driving mode are selected by the select switch, respectively. The engagement control places the lock mechanism in the locked state through the supply of the ON pressure to the engagement-side oil chamber and lowers the hydraulic pressure in the engagement-side oil chamber. The release control places the lock mechanism in the unlocked state through the supply of the OFF pressure to the release-side oil chamber and lowers the hydraulic pressure in the release-side oil chamber. The vehicle stop determination unit determines whether a vehicle is going to stop based on a driving condition of the vehicle. When the vehicle stop determination unit determines that the vehicle is going to stop, the control device places the lock mechanism in the unlocked state through the supply of the OFF pressure to the release-side oil chamber even if the driving mode is selected by the select switch. Furthermore, a corresponding control method is also provided.

According to the above-described aspect, upon selection of the driving mode by the select switch, normal engagement control is performed, and the friction element is maintained in the engaged state by placing the lock mechanism in the locked state. If it is determined that the vehicle is going to stop based on the driving condition of the vehicle, the OFF pressure is supplied to the release-side oil chamber, and the lock mechanism is deactivated.

At the time the vehicle stops, the lock mechanism is already deactivated. Accordingly, even if the driving mode is switched to the non-driving mode immediately before or after the vehicle stops, the friction element can be released promptly by draining the hydraulic pressure in the engagement-side oil chamber. It is hence possible to prevent transmission of the power of an engine caused by a delay in deactivating the lock mechanism.

### BRIEF DESCRIPTION OF DRAWINGS

Fig. 1 shows a schematic configuration of a vehicle equipped with an automatic transmission according to an embodiment of the present invention.
Fig. 2 is a cross-sectional view of a forward clutch and a clutch operation pack that causes the forward clutch to operate.
Fig. 3 is a flowchart showing the substance of processing executed by a transmission controller to cause the forward clutch to be engaged and released.
Fig. 4 is a flowchart showing the substance of processing executed by the transmission controller to switch engagement control for the forward clutch.
Fig. 5 shows a table for setting a stop determination vehicle speed and a running determination vehicle speed.

### DESCRIPTION OF EMBODIMENTS

The following describes an embodiment of the present invention with reference to the attached drawings.

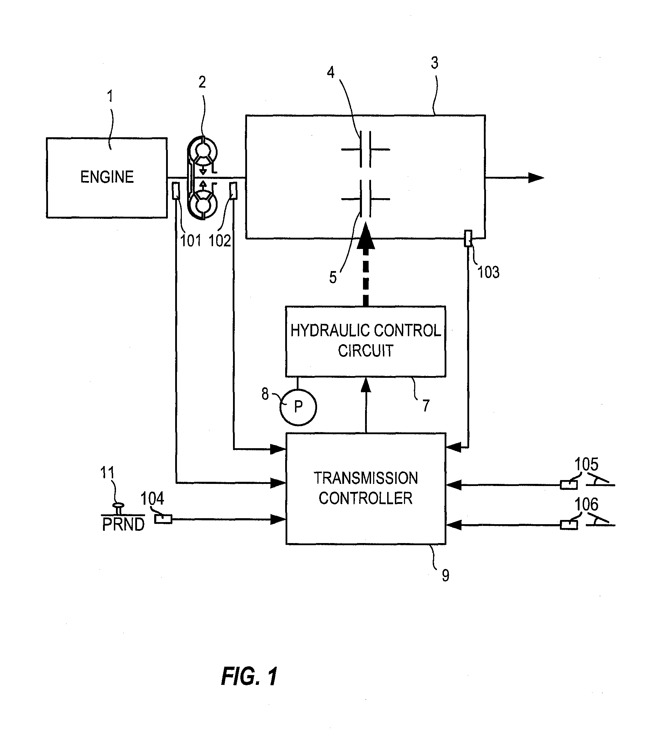

Fig. 1 shows a schematic configuration of a vehicle equipped with an automatic transmission according to the embodiment of the present invention. The vehicle includes an engine 1, a torque converter 2, and a transmission 3. An output rotation of the engine 1 is transmitted to unillustrated drive wheels via the torque converter 2, the transmission 3, and an unillustrated differential gear unit.

The transmission 3 is a step or continuously variable automatic transmission. The transmission 3 includes a reverse brake 4 and a forward clutch 5. In a state where the reverse brake 4 is engaged, the transmission 3 outputs the rotation of the engine 1 in reverse. In a state where the forward clutch 5 is engaged, the transmission 3 outputs the rotation of the engine 1 while maintaining its rotational direction.

The reverse brake 4 is a traditional friction element which is engaged through a supply of an engagement pressure, and which requires a continuous supply of the engagement pressure to maintain the engaged state thereof. The reverse brake 4 can be released by stopping the supply of the engagement pressure.

As will be described later, the forward clutch 5 is a friction element having a lock mechanism BL attached thereto. Once the lock mechanism BL has been placed in a locked state through a supply of an ON pressure to the forward clutch 5, the forward clutch 5 can be maintained in the engaged state even if the supply of the ON pressure is stopped. The forward clutch 5 can be released by placing the lock mechanism BL in a deactivated state through a supply of an OFF pressure to the forward clutch 5. Once the lock mechanism BL has been placed in the deactivated state, the forward clutch 5 can be maintained in the released state even if the supply of the OFF pressure is stopped. The configuration of the forward clutch 5 will be described later in detail.

Should both of the reverse brake 4 and the forward clutch 5 be engaged simultaneously, the transmission 3 will be placed in an interlocked state where an input/output shaft of the transmission 3 cannot rotate. Therefore, the reverse brake 4 and the forward clutch 5 are engaged in an alternating manner.

A hydraulic control circuit 7 includes a regulator valve, a solenoid valve, a hydraulic pump 8, and a hydraulic passage. The regulator valve adjusts a hydraulic pressure from the hydraulic pump 8, which is driven by the engine 1, to a line pressure. Using the line pressure as a source pressure, the solenoid valve adjusts a hydraulic pressure supplied to friction elements, including the forward clutch 5 (and also to constituent elements of a continuously variable transmission mechanism in the case where the transmission 3 is a continuously variable transmission). The valves and friction elements are connected to one another by the hydraulic passage.

Each valve of the hydraulic control circuit 7 is controlled based on a control signal from a transmission controller 9. The transmission controller 9 is composed of a CPU, a ROM, a RAM, an input/output interface, and the like. The transmission controller 9 determines a driving condition of the vehicle based on various types of signals input from various types of sensors and an engine controller, and outputs instructions to the hydraulic control circuit 7 so as to achieve a gear position (a speed ratio in the case where the transmission 3 is a continuously variable transmission) appropriate for the driving condition.

For example, the transmission controller 9 receives, as input, signals from rotational speed sensors 101, 102, 103, a mode detection switch 104, an accelerator pedal opening sensor 105, a brake switch 106, and the like. The rotational speed sensor 101 detects a rotational speed Ne of the engine 1. The rotational speed sensor 102 detects an input rotational speed of the transmission 3. The rotational speed sensor 103 detects an output rotational speed of the transmission 3. The mode detection switch 104 detects a mode of the transmission 3 selected by a select switch 11. The accelerator pedal opening sensor 105 detects an amount of operation on an accelerator pedal (hereinafter referred to as "accelerator pedal opening, APO"). The brake switch 106 detects ON/OFF of a brake.

The select switch 11 is lever-operated or button-operated. Operating a lever or buttons of the select switch 11 enables selection of one of the following modes as a mode of the transmission 3: a parking mode (hereinafter "P mode"), a reverse mode (hereinafter "R mode"), a neutral mode (hereinafter "N mode"), and a driving mode (hereinafter "D mode").

The transmission controller 9 causes each of the reverse brake 4 and the forward clutch 5 to be engaged or released in accordance with a mode selected by the select switch 11. Specifically, in the D mode, the reverse brake 4 is released and the forward clutch 5 is engaged. In the R mode, the reverse brake 4 is engaged and the forward clutch 5 is released. In the P mode and the N mode, the reverse brake 4 and the forward clutch 5 are released.

A description is now given of a detailed configuration of the forward clutch 5.

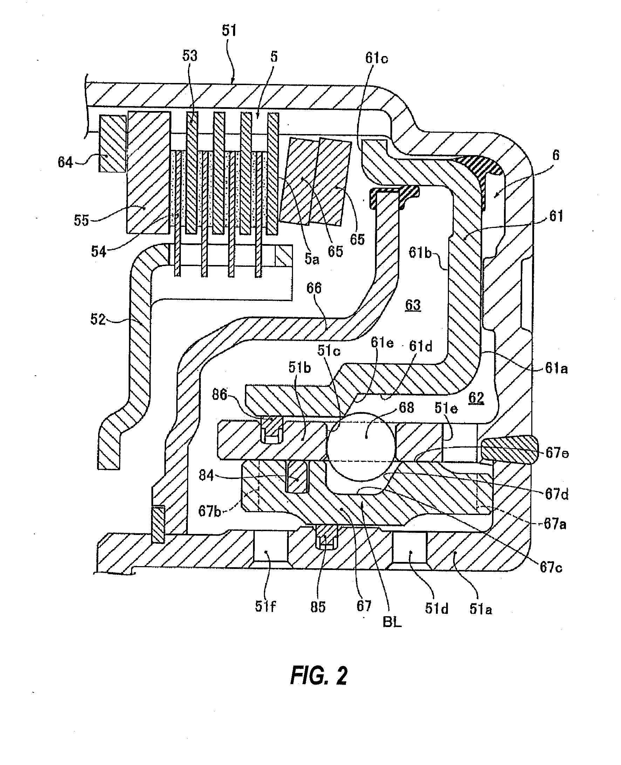

Fig. 2 is a cross-sectional view of the forward clutch 5 and a clutch operation pack 6 that causes the forward clutch 5 to operate. The configurations thereof will now be described.

The forward clutch 5 includes a clutch drum 51, a clutch hub 52, driven plates 53, drive plates 54, and a retainer plate 55.

The clutch drum 51 and the clutch hub 52 are arranged coaxially. Unillustrated rotational elements (a shaft, a gear, etc.) are joined to the clutch drum 51. Other unillustrated rotational elements (a shaft, a gear, etc.) are joined to the clutch hub 52.

The driven plates 53 are attached to the clutch drum 51 by means of a spline joint such that the driven plates 53 are slidable in an axial direction. The drive plates 54 are attached to the clutch hub 52 by means of a spline joint such that the drive plates 54 are slidable in the axial direction. Four driven plates 53 and four drive plates 54 are arranged alternately. The drive plates 54 have friction surfaces on both sides, and clutch facings are attached to the friction surfaces.

The clutch drum 51 transmits, to the clutch hub 52, the rotation input from the rotational elements joined to the clutch drum 51 via the driven plates 53 and the drive plates 54.

The retainer plate 55 is interposed between a retaining ring 64 and a drive plate 54 that is arranged at the end opposite to a hydraulic piston 61. The retaining ring 64 is fixed to a groove on the inner periphery of the clutch drum 51. The retainer plate 55 has a friction surface on one side. Furthermore, the retainer plate 55 has a larger thickness than the driven plates 53 in the axial direction, and prevents the driven plates 53 and the drive plates 54 from falling.

The clutch operation pack 6 includes the hydraulic piston 61, an ON pressure piston chamber 62, an OFF pressure piston chamber 63, the retaining ring 64, diaphragm springs 65, a partition plate 66, and the lock mechanism BL.

The hydraulic piston 61 is arranged such that it is displaceable in the axial direction relative to the forward clutch 5. The hydraulic piston 61 has an ON pressure receiving surface 61a on one side, and an OFF pressure receiving surface 61b on the other side.

The ON pressure piston chamber 62 is defined between the clutch drum 51 and the hydraulic piston 61 so as to cause the ON pressure to act on the ON pressure receiving surface 61a of the hydraulic piston 61.

The OFF pressure piston chamber 63 is defined between the partition plate 66, which is fixed to the clutch drum 51, and the hydraulic piston 61 so as to cause the OFF pressure to act on the OFF pressure receiving surface 61b of the hydraulic piston 61.

The retaining ring 64 is arranged in a position opposite to the hydraulic piston 61 with the forward clutch 5 therebetween, and supports the forward clutch 5 in the axial direction.

The diaphragm springs 65 are interposed between a clutch-side end surface 61c of the hydraulic piston 61 and a piston-side end surface 5a of the forward clutch 5. Two diaphragm springs 65 are arranged in such a manner that they are stacked in the axial direction. The diaphragm springs 65 exert an engaging force acting on the forward clutch 5 as a result of moving the hydraulic piston 61 in an engaging direction toward the retaining ring 64.

The lock mechanism BL is built in the clutch drum 51, and is composed of the hydraulic piston 61, a ball holding piston 67, and a ball 68.

The hydraulic piston 61 is arranged such that it is displaceable in the axial direction relative to the forward clutch 5. The hydraulic piston 61 has a housing part 61d and a tapered surface 61e. The housing part 61d houses the ball 68 when a movement of the hydraulic piston 61 in a releasing direction is restricted. The tapered surface 61e is formed continuously with the housing part 61d. At the time of a stroke movement of hydraulic piston 61 in the releasing direction, the tapered surface 61e pushes the ball 68 inward.

The ball holding piston 67 is arranged in a cylindrical space defined by a cylindrical inner periphery part 51a of the clutch drum 51 that covers the hydraulic piston 61 and by a cylindrical partition wall part 51b that projects from the clutch drum 51 in the axial direction. The ball holding piston 67 moves in the axial direction with the action of the ON pressure or the OFF pressure. A seal ring 84 seals between the outer peripheral surface of the ball holding piston 67 and the cylindrical partition wall part 51b. A seal ring 85 seals between the inner peripheral surface of the ball holding piston 67 and the cylindrical inner periphery part 51a. A seal ring 86 seals between the inner peripheral surface of the hydraulic piston 61 and the cylindrical partition wall part 51b. In this way, the ON pressure piston chamber 62 and the OFF pressure piston chamber 63 are defined on both sides of the hydraulic piston 61.

An ON pressure port 51d, which opens into the clutch drum 51, and the ON pressure piston chamber 62 communicate with each other via an ON pressure communication groove 67a formed in the ball holding piston 67 and via an ON pressure communication hole 51e, which is an opening through the cylindrical partition wall part 51b. An OFF pressure port 51f, which opens into the clutch drum 51, and the OFF pressure piston chamber 63 communicate with each other via an OFF pressure communication groove 67b formed in the ball holding piston 67 and via an OFF pressure communication clearance secured between an end portion of the cylindrical partition wall part 51b and the partition plate 66.

The ball holding piston 67 has a housing part 67c, a tapered surface 67d, and a lock surface 67e. The housing part 67c houses the ball 68 when a movement of the hydraulic piston 61 in the releasing direction is permitted. The tapered surface 67d and the lock surface 67e are formed continuously with the housing part 67c. At the time of a stroke movement of the ball holding piston 67 in a direction toward the forward clutch 5, the tapered surface 67d pushes the ball 68 outward, and the lock surface 67e locks the pushed ball 68 at a resultant position thereof.

The ball 68 is placed in a ball hole 51c, which is an opening through the cylindrical partition wall part 51b. The tapered surfaces 61e, 67d of the hydraulic piston 61 and the ball holding piston 67 apply a force to the ball 68 as the pistons 61, 67 move in the axial direction with the action of the ON pressure or the OFF pressure. Accordingly, the ball 68 moves in a radial direction between a lock position and a lock deactivation position.

According to the above-described configuration, the supply of the ON pressure to the ON pressure piston chamber 62 causes the hydraulic piston 61 to move in the engaging direction toward the forward clutch 5, thereby placing the forward clutch 5 in the engaged state with a pushing force of the diaphragm springs 65 that have been pushed and compressed. Upon the movement of the hydraulic piston 61 in the engaging direction, the ball 68 moves in a direction toward an outer diameter due to a rotation-induced centrifugal force and the hydraulic pressure. Consequently, the ball 68 is housed in the housing part 61d. As the ON pressure acts on the ball holding piston 67, the ball holding piston 67 moves in the axial direction (the direction toward the forward clutch 5), and the lock surface 67e holds the ball 68 held in the housing part 67c.

As a result, the lock mechanism BL is placed in the locked state. Accordingly, a movement of the hydraulic piston 61 in the releasing direction is restricted, and the engaged state of the forward clutch 5 is maintained even if the ON pressure is drained. The ON pressure is supplied to the ON pressure piston chamber 62 only during an engagement operation. It is not necessary to supply the ON pressure to maintain the engaged state of the forward clutch 5.

A lower limit value of the ON pressure with which the lock mechanism BL can be placed in the locked state is referred to as a lock pressure, and is determined uniquely based on a spring constant of the diaphragm springs 65, the area of the ON pressure receiving surface 61a of the hydraulic piston 61, and the like.

Furthermore, by supplying a hydraulic pressure lower than the lock pressure to the ON pressure piston chamber 62, the forward clutch 5 can be placed in the engaged state without placing the lock mechanism BL in the locked state. In this case, as the lock mechanism BL cannot restrict a movement of the hydraulic piston 61 in the releasing direction, it is necessary to keep supplying the hydraulic pressure to the ON pressure piston chamber 62 to maintain the forward clutch 5 in the engaged state. Additionally, the transmission capacity of the forward clutch 5 at this time depends on the hydraulic pressure supplied to the ON pressure piston chamber 62.

The above-described control by the transmission controller 9 to maintain the forward clutch 5 in the engaged state by placing the lock mechanism BL in the locked state through the supply and discharge of the ON pressure is referred to as normal engagement control. In contrast, the above-described control by the transmission controller 9 to maintain the forward clutch 5 in the engaged state without placing the lock mechanism BL in the locked state by continuously supplying a hydraulic pressure lower than the lock pressure to the ON pressure piston chamber 62 is referred to as vehicle stop engagement control.

When the D mode is selected by the select switch 11, the transmission controller 9 performs the normal engagement control. However, when it is determined that the vehicle is going to stop based on the driving condition of the vehicle while the D mode is selected, the transmission controller 9 places the lock mechanism BL in an unlocked state by supplying the OFF pressure to the OFF pressure piston chamber 63, and performs the vehicle stop engagement control. This prevents a situation in which the power of the engine 1 is transmitted while the N mode is selected and the vehicle is stopped due to a delay in deactivating the lock mechanism BL in a low vehicle speed range. The substance of control by the transmission controller 9 will be described later in detail.

Meanwhile, the supply of the OFF pressure to the OFF pressure piston chamber 63 causes the ball holding piston 67 to move in the axial direction (a direction away from the forward clutch 5), from the position in which the ball 68 is held by the lock surface 67e to the position in which holding of the ball 68 by the lock surface 67e is cancelled. A combination of a force of the OFF pressure and a reaction force opposing the engaging force exerted by the diaphragm springs 65 acts on the hydraulic piston 61. This results in a stroke movement of the hydraulic piston 61 in a return direction, thereby pushing the ball 68 back in a lock deactivation direction. Once the ball 68 has moved to the lock deactivation position, the lock mechanism BL is placed in the unlocked state, and the forward clutch 5 is released.

When the forward clutch 5 is released, the ON pressure is zero. This maintains a state where the ball 68 is housed in the housing part 67c of the ball holding piston 67 even if the OFF pressure is drained. The OFF pressure is supplied to the OFF pressure piston chamber 63 only during a release operation. It is not necessary to supply the OFF pressure to maintain the released state of the forward clutch 5.

It should be noted that, when the lock mechanism BL is not locked due to the vehicle stop engagement control, the above-described supply and discharge of the OFF pressure are not necessary to release the forward clutch 5, and the forward clutch 5 can be released by draining the hydraulic pressure in the ON pressure piston chamber 62.

The above-described control by the transmission controller 9 to maintain the forward clutch 5 in the released state by placing the lock mechanism BL in the unlocked state through the supply and discharge of the OFF pressure is referred to as normal release control. In contrast, control by the transmission controller 9 to release the forward clutch 5 by draining the hydraulic pressure in the ON pressure piston chamber 62 is referred to as unlocked state release control. When a mode other than the D mode is selected by the select switch 11, the transmission controller 9 performs the normal release control or the unlocked state release control depending on whether the lock mechanism BL is in the locked state. The substance of control by the transmission controller 9 will be described later in detail.

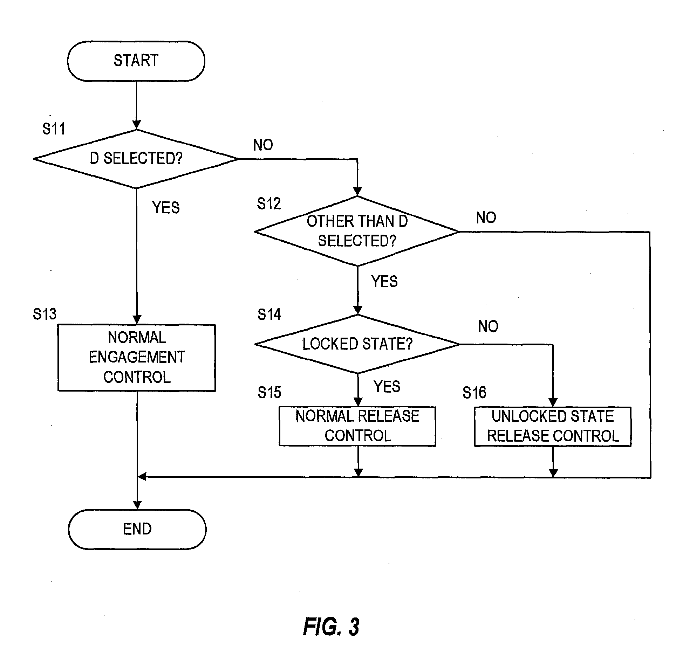

A description is now given of the substance of control by the transmission controller 9 with reference to Figs. 3 to 5.

Fig. 3 is a flowchart showing the substance of processing executed by the transmission controller 9 to cause the forward clutch 5 to be engaged and released.

According to this flowchart, the transmission controller 9 compares a previous value and a current value of a mode of the transmission 3 selected by the select switch 11 so as to determine whether the selected mode of the transmission 3 is the D mode or a mode other than the D mode (P mode, R mode, or N mode) (S11, S12).

When the D mode has been selected, the processing proceeds to S13 and the transmission controller 9 performs the normal engagement control. As a result, the ON pressure is supplied to the ON pressure piston chamber 62, and once the lock mechanism BL has been placed in the locked state, the supply of the ON pressure is stopped.

On the other hand, when a mode other than the D mode has been selected, the processing proceeds to S14 and the transmission controller 9 determines whether the lock mechanism BL is in the locked state.

Whether the lock mechanism BL is in the locked state can be determined based on, for example, whether the OFF pressure has been supplied in later-described S25 after performing the normal engagement control in S13 or later-described S28. It is determined that the lock mechanism BL is in the locked state if the vehicle stop engagement control has not been performed, and that the lock mechanism BL is in the unlocked state if the vehicle stop engagement control has been performed.

Alternatively, whether the lock mechanism BL is in the locked state may be determined based on a change in the ON pressure when performing the normal engagement control and a change in the OFF pressure when supplying the OFF pressure in release control or later-described S25 (these changes both represent a change in the hydraulic pressure caused by a stroke movement of the ball holding piston 67).

If it is determined that the lock mechanism BL is in the locked state, the processing proceeds to S15 and the transmission controller 9 performs the normal release control. As a result, the OFF pressure is supplied to the OFF pressure piston chamber 63, and after the lock mechanism BL is placed in the unlocked state, the supply of the OFF pressure is stopped, and the forward clutch 5 is released.

On the other hand, if it is determined that the lock mechanism BL is in the unlocked state, the processing proceeds to S16 and the transmission controller 9 performs the unlocked state release control. As a result, the hydraulic pressure in the ON pressure piston chamber 62 is drained, and the forward clutch 5 is released.

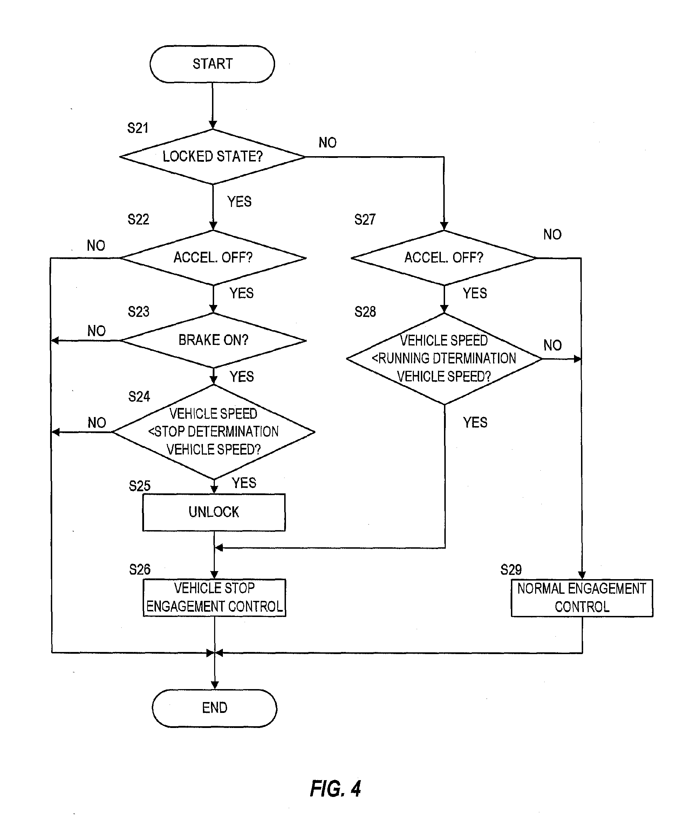

Fig. 4 is a flowchart showing the substance of processing executed by the transmission controller 9 to switch engagement control for the forward clutch 5. After the normal engagement control (S12) is performed in the engagement and release processing of Fig. 3, the processing of Fig. 4 is executed repeatedly while the D mode is selected by the select switch 11.

According to this flowchart, the transmission controller 9 first determines whether the lock mechanism BL is in the locked state.

If it is determined that the lock mechanism BL is in the locked state, the processing proceeds to S22.

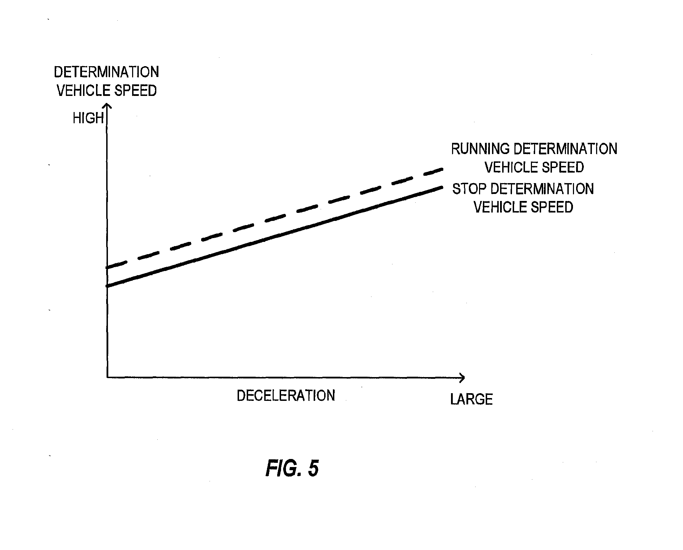

In S22 to S24, the transmission controller 9 determines whether the vehicle is going to stop based on the driving condition of the vehicle. Specifically, it is determined that the vehicle is going to stop if the accelerator pedal is not depressed (S22: YES), a brake pedal is depressed (S23: YES), and a vehicle speed is lower than a stop determination vehicle speed (S24: YES). The value of the stop determination vehicle speed is obtained by referring to a table shown in Fig. 5. The larger the deceleration of the vehicle, the larger the value of the stop determination vehicle speed. The reason why a higher stop determination vehicle speed is set for a larger vehicle deceleration is because the lock mechanism BL cannot be deactivated by the time the vehicle stops unless lock deactivation for the lock mechanism BL is started earlier, that is to say, at a higher vehicle speed in the case of a larger vehicle deceleration.

If it is determined that the vehicle is going to stop in the processes of S22 to S24, the processing proceeds to S25. Otherwise, the processing ends.

In S25, the transmission controller 9 places the lock mechanism BL in the unlocked state by supplying the OFF pressure to the OFF pressure piston chamber 63.

In S26, the transmission controller 9 performs the vehicle stop engagement control. A hydraulic pressure lower than the lock pressure is supplied to the ON pressure piston chamber 62, thereby placing the forward clutch 5 in the engaged state without placing the lock mechanism BL in the locked state. Thereafter, for the duration of the D mode, this hydraulic pressure lower than the lock pressure is continuously supplied to the ON pressure piston chamber 62, thereby maintaining the forward clutch 5 in the engaged state, except when the normal engagement control is performed again in later-described S28.

On the other hand, if it is determined in S21 that the lock mechanism BL is not in the locked state, that is to say, the lock mechanism BL is in the unlocked state, the processing proceeds to S27.

In S27 and S28, the transmission controller 9 determines whether the vehicle continues to run based on the driving condition of the vehicle. Specifically, it is determined that the vehicle continues to run if the accelerator pedal is depressed and a vehicle speed is higher than a running determination vehicle speed. The value of the running determination vehicle speed is obtained by referring to the table shown in Fig. 5. At the same deceleration, the running determination vehicle speed is set to be higher than the stop determination vehicle speed by several km/h. The value of the running determination vehicle speed is set in this way so as to prevent hunting in control.

If it is determined that the vehicle continues to run in the processes of S27 and S28, the processing proceeds to S29 and the normal engagement control is performed again. As a result, the ON pressure is supplied to the ON pressure piston chamber 62, and after the lock mechanism BL is placed in the locked state, the supply of the ON pressure is stopped.

If it is determined in the processes of S27 and S28 that the vehicle does not continue to run, that is to say, the vehicle is going to stop, the processing proceeds to S26 and the vehicle stop engagement control is continued.

Operational effects of the present embodiment will now be described.

According to the above-described embodiment, when the D mode (corresponding to the driving mode) is selected by the select switch 11, the normal engagement control is performed in which the lock mechanism BL is placed in the locked state, thereby maintaining the forward clutch 5 in the engaged state (S13). If it is determined that the vehicle is going to stop based on the driving condition of the vehicle, the OFF pressure is supplied to the OFF pressure piston chamber 63 (S25).

Therefore, at the time when the vehicle stops, the lock mechanism BL is already deactivated. Accordingly, even if the D mode is switched to the N mode (corresponding to the non-driving mode) immediately before or after the vehicle stops, the forward clutch 5 can be released promptly by a pushing force exerted by the diaphragm spring 65 upon drainage of the hydraulic pressure in the ON pressure piston chamber 62 (S16). It is hence possible to prevent transmission of the power of the engine 1 caused by a delay in deactivating the lock mechanism BL.

Furthermore, after the lock mechanism BL is deactivated as a result of determining that the vehicle is going to stop based on the driving condition of the vehicle, a hydraulic pressure lower than the lock pressure is continuously supplied to the ON pressure piston chamber 62 so that the forward clutch 5 is maintained in the engaged state (S26). In this way, the power of the engine 1 can be transmitted until the D mode is switched to the N mode. It is hence possible to avoid a situation in which the power of the engine 1 is not transmitted despite being in the D mode.

Moreover, even if the lock mechanism BL has been deactivated as a result of determining that the vehicle is going to stop based on the driving condition of the vehicle, when it is determined that the vehicle continues to run, the ON pressure is supplied to the ON pressure piston chamber 62 again, the lock mechanism BL is placed in the locked state, and then the supply of the ON pressure is stopped (S29). This makes it possible to prevent degradation of the fuel economy caused by a continuous supply of the hydraulic pressure to the ON pressure piston chamber 62 owing to continuation of the vehicle stop engagement control despite continuous running of the vehicle.

This concludes the description of the embodiment of the present invention. It should be noted that the above-described embodiment merely represents a part of application examples of the present invention, and is not intended to limit a technical scope of the present invention to specific configurations of the above-described embodiment.

For example, in the above-described embodiment, the supply of the hydraulic pressure to the ON pressure piston chamber 62 is stopped after the lock mechanism BL is placed in the locked state. However, it is possible to adopt a configuration in which the hydraulic pressure in the ON pressure piston chamber 62 is lowered without stopping the supply. Similarly, in the above-described embodiment, the supply of the hydraulic pressure to the OFF pressure piston chamber 63 is stopped after the lock mechanism BL is placed in the unlocked state. However, it is possible to adopt a configuration in which the hydraulic pressure in the OFF pressure piston chamber 63 is lowered without stopping the supply.

Furthermore, for example, the specific configuration of the forward clutch 5 shown in Fig. 2 is an example of a friction element having a lock mechanism attached thereto. The present invention is also applicable to a friction element having a lock mechanism attached thereto and having a configuration other than this specific configuration.

Moreover, while the forward clutch 5 is a friction element having a lock mechanism attached thereto in the above-described embodiment, the reverse brake 4 may be a friction element having a lock mechanism attached thereto. In this case, control similar to those of the above-described embodiment can be performed by supplying the OFF pressure to a release-side oil chamber of the reverse brake 4 when it is determined that the vehicle is going to stop while running in the R mode. Here, the R mode corresponds to the driving mode.

The present application claims the benefit of priority from Japanese Patent Application No. 2012-212188, filed in the Japan Patent Office on September 26, 2012, the disclosure of which is incorporated herein by reference in its entirety.

## Claims

1. An automatic transmission, comprising:
a friction element arranged on a power transmission path such that a lock mechanism is placed in a locked state through a supply of an ON pressure to an engagement-side oil chamber and placed in an unlocked state through a supply of an OFF pressure to a release-side oil chamber, the friction element being maintained in an engaged state, even with a reduction in a hydraulic pressure in the engagement-side oil chamber once the lock mechanism has been placed in the locked state, and being maintained in a released state, even with a reduction in a hydraulic pressure in the release-side oil chamber once the lock mechanism has been placed in the unlocked state;
a select switch capable of selecting a driving mode or a non-driving mode as a mode of the automatic transmission;
a control device that performs engagement control and release control when the driving mode and the non-driving mode are selected by the select switch, respectively, the engagement control placing the lock mechanism in the locked state through the supply of the ON pressure to the engagement-side oil chamber and lowering the hydraulic pressure in the engagement-side oil chamber, and the release control placing the lock mechanism in the unlocked state through the supply of the OFF pressure to the release-side oil chamber and lowering the hydraulic pressure in the release-side oil chamber; and
vehicle stop determination means adapted to determine whether a vehicle is going to stop based on a driving condition of the vehicle, wherein
when the vehicle stop determination means determines that the vehicle is going to stop, the control device places the lock mechanism in the unlocked state through the supply of the OFF pressure to the release-side oil chamber even if the driving mode is selected by the select switch.

2. The automatic transmission according to claim 1, wherein
when the vehicle stop determination means determines that the vehicle is going to stop, the control device places the lock mechanism in the unlocked state through the supply of the OFF pressure to the release-side oil chamber even if the driving mode is selected by the select switch, and places the friction element in the engaged state through a supply of a hydraulic pressure lower than a lock pressure to the engagement-side oil chamber, the lock pressure placing the lock mechanism in the locked state.

3. The automatic transmission according to claim 1 or 2, further comprising:
running determination means adapted to determine whether the vehicle continues to run without stopping based on the driving condition of the vehicle, wherein
even if the lock mechanism has been placed in the unlocked state through the supply of the OFF pressure to the release-side oil chamber as a result of the vehicle stop determination means determining that the vehicle is going to stop, when the running determination means determines that the vehicle continues to run, the lock mechanism is placed in the locked state through the supply of the ON pressure to the engagement-side oil chamber and the hydraulic pressure in the engagement-side oil chamber is lowered.

4. A control method for an automatic transmission having a friction element arranged on a power transmission path such that a lock mechanism is placed in a locked state through a supply of an ON pressure to an engagement-side oil chamber and placed in an unlocked state through a supply of an OFF pressure to a release-side oil chamber, the friction element being maintained in an engaged state, even with a reduction in a hydraulic pressure in the engagement-side oil chamber once the lock mechanism has been placed in the locked state, and being maintained in a released state, even with a reduction in a hydraulic pressure in the release-side oil chamber once the lock mechanism has been placed in the unlocked state; and a select switch capable of selecting a driving mode or a non-driving mode as a mode of the automatic transmission, the control method comprising:
performing engagement control when the driving mode is selected by the select switch, the engagement control placing the lock mechanism in the locked state through the supply of the ON pressure to the engagement-side oil chamber and lowering the hydraulic pressure in the engagement-side oil chamber;
performing release control when the non-driving mode is selected by the select switch, the release control placing the lock mechanism in the unlocked state through the supply of the OFF pressure to the release-side oil chamber and lowering the hydraulic pressure in the release-side oil chamber;
determining whether a vehicle is going to stop based on a driving condition of the vehicle; and
when it is determined that the vehicle is going to stop, placing the lock mechanism in the unlocked state through the supply of the OFF pressure to the release-side oil chamber even if the driving mode is selected by the select switch.
